# EUROPEAN PATENT APPLICATION

(11) **EP 1 798 845 A1**
(43) Date of publication of application: **20.06.2007**
(21) Application number: 05461005.0
(22) Date of filing: 16.12.2005
(51) Int. Cl.: H02M 3/335, H02M 7/217

(54) **Multi-output switched-mode power supply**

(71) Applicant: ADVANCED DIGITAL BROADCAST S.A., 1218 Grand-Saconnex (CH)
(72) Inventor: Wabiszczewicz, Zbigniew, 65-559, Zielona Gora (PL)
(74) Representative: Hudy, Ludwik

(57) **Abstract**

A multi-output switched-mode power supply has an AC/DC converter (201) with an AC input voltage at its input, a DC/AC converter (202) and a transformer (203), which provides a Vac3 voltage at its output, which is coupled to a plurality of output blocks (210,220,230). Each output block (210,220,230) consists of a switch (211,221,231), a filter (212,222,232) and a controller (213,223,233). The switch (211,221,231) of each output block (210,220,230) has its input connected to the Vac3 voltage and provides at its output a rectified switch output voltage when turned on and high impedance when turned off. In turn, the filter (212,222,232) of each output block (210,220,230) has its input coupled to an output of the corresponding switch (211,221,231) and provides at its output a smoothed output voltage Vout1, Vout2, Voutn, whereas the controller (213,223,233), which has its first input connected to the output voltage, its second input connected to a reference voltage, and its third input connected to the Vac3 voltage, provides at its output a switch control signal to the corresponding switch (211,221,231). The switch control signal turning the corresponding switch (211,221,231) on is generated when the output voltage drops below the reference voltage and the Vac3 voltage is zero, and the switch control signal turning the corresponding switch (211,221,231) off is generated when the output voltage increases above the reference voltage.

## Description

The invention relates to a multi-output switched-mode power supply, especially used to supply power to electronic devices.

Increasing complexity of electronic devices requires constant improvements in power supply circuits, in order to supply a stable, noise-free DC voltage to the device. The most popular type of power supply used in the electronic devices such as computers, set-top boxes or game consoles, is a switched-mode power supply, due to its compact dimensions and high efficiency. Multi-output switched-mode power supplies are used to provide DC voltages of various amplitudes, such as 1.8, 2.5, 3.3, 5V for different electronic circuits in the electronic devices.

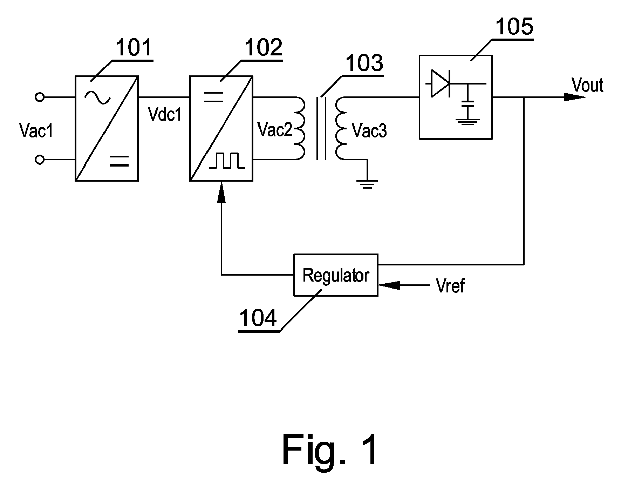

A typical structure of a single-output switched-mode power supply is shown in Fig. 1. An AC mains voltage Vac1 (for example, 230 V at 50Hz) is fed to an input AC/DC converter 101, for example a rectifier with a smoothing capacitor, which converts it to a DC voltage Vdc1. The Vdc1 voltage is input to a DC/AC converter 102, which produces an AC square wave voltage Vac2. The Vac2 voltage is input to a transformer 103, which outputs an AC voltage Vac3. The transformer 103 separates the output stage from the input stage of the power supply and defines the amplitude of the Vac3 voltage. The DC/AC converter 102 comprises a switch operating at a high frequency, in the range from 1 kHz to 10 MHz, which defines the frequency of the Vac3 voltage. The pulse width of the Vac3 voltage can be controlled by the on/off-time of the switch of the DC/AC converter 102, which is defined by a regulator 104 connected in a feedback loop, thus creating a pulse-width modulated (PWM) loop. The regulator 104 adjusts the duty cycle of the Vac3 voltage to match the Vout voltage to a reference voltage Vref. The Vac3 voltage is input to an output AC/DC converter 105, for example a rectifier with a smoothing capacitor, which produces a Vout DC voltage. The amplitude of the Vout voltage is proportional to the pulse width of the Vac3 signal.

The single-output switched-mode power supply structure shown in Fig. 1 forms a basis for many multi-output switched-mode power supplies, such as the one known from the US patent No. 6,771,052 "Programmable multiple output DC-DC isolated power supply", in which multiple output voltages are generated by multiple blocks. Each block comprises a separate rectifier and a PWM controller. The power supply comprises a microcontroller, which generates PWM control signals for each block to adjust its output voltage to a reference value specified for that block. Such design allows adjusting the output voltages according to the needs of a specific device in which the power supply is to be used. However, the use of such solution in a power supply of a structure as shown in Fig. 1 would require the conversion of the Vac3 voltage to a DC voltage. Moreover, due to individual switching of output PWM stages, the generated output voltages may include noise components related to uneven switching.

The efficiency of a power supply for a broad range of load conditions can be improved by the design of the DC/AC converter and its regulator. The US patent No. 6,275,018 "Switching power converter with gated oscillator controller" presents a power converter comprising a DC voltage input connected to a power switch operated by a controller, the power switch providing pulses of power to a load. The pulses are regulated by the controller, connected to a free running oscillator and varying the number of pulses transmitted to the switch, responsively to the output voltage. Such solution is advantageous mostly to single-output power supplies. Moreover, in case the proposed structure was to be used in a power supply as shown in Fig. 1, the Vac3 voltage would have to be converted to a DC voltage.

Therefore, there exists a need for a multi-output switched-mode AC-DC power supply of a simple structure, providing stable output voltages with a low amount of noise components, with a limited number of rectifying and smoothing elements.

Hence, the object of the present invention is to provide such a multi-output switched-mode power supply.

According to the present invention in a multi-output switched-mode power supply with an AC voltage Vac1 input, an AC/DC converter having its input coupled to the Vac1 input voltage and providing at its output a DC voltage Vdc1, a DC/AC converter having its input coupled to the Vdc1 voltage and providing at its output an AC voltage Vac2, a transformer having its input connected to the Vac2 voltage and providing a Vac3 voltage at its output , the output of said transformer is coupled to a plurality of output blocks. Each output block comprises a switch controlled by a controller and a filter. The controller of each output block defines on- and off-times of the corresponding switch, so that the output voltage from a given block, after smoothing by the filter, remains close (within a permitted tolerance range) to a reference voltage for this block. The switch of each output block has its input connected to the Vac3 voltage and provides at its output a rectified switch output voltage when turned on and high impedance when turned off. The filter of each output block has its input coupled to an output of the corresponding switch and provides at its output a smoothed output voltage Vout1, Vout2, Voutn. The controller has its first input connected to the output voltage Vout1, Vout2, Voutn, its second input connected to a reference voltage Vref1, Vref2, Vrefn, and its third input connected to the Vac3 voltage and provides at its output a switch control signal Vreg1, Vreg2, Vregn. The switch control signal Vreg1, Vreg2, Vregn turning the switch on is generated when the output voltage Vout1, Vout2, Voutn drops below the reference voltage Vref1, Vref2, Vrefn and the Vac3 voltage is zero, and the switch control signal Vreg1, Vreg2, Vregn turning the switch off is generated when the output voltage Vout1, Vout2, Voutn increases above the reference voltage Vref1, Vref2, Vrefn.

Preferably, the switch control signal Vreg1, Vreg2, Vregn turning the switch off is generated when the Vac3 voltage is zero.

It is advantageous that the DC/AC converter provides at its output an AC voltage Vac2 of a constant duty cycle.

The inventive device may additionally comprise an optimizer, which has a plurality of inputs, each input connected to the switch control signals Vreg1, Vreg2 provided by the controllers The optimizer can provide a plurality of optimized output signals Vopt1, Vopt2 connected to the switch control signal inputs of the switches, where the optimized output signals Vopt1, Vopt2 control the switch on- and off-times so as to provide a balanced distribution of load.

The balanced distribution of load can be provided by shifting the switch turn-on time controlled by selected switch control signals Vreg1, Vreg2.

Alternatively, the balanced distribution of load can be provided by splitting and evening distribution of the switch control signals Vreg1, Vreg2 over time.

According to the invention, the DC/AC converter may additionally have a regulating input and provide at its output an AC voltage Vac2 of a variable duty cycle, regulated by the regulating input, and the optimizer additionally providing a regulating signal connected to the regulating input of the DC/AC converter, which controls the duty cycle of the Vac2 signal to provide a balanced distribution of load.

The exemplary embodiments of the invention will now be described with reference to the accompanying drawings, in which:
Fig. 1 presents a prior art single-output switched-mode power supply;
Fig. 2 presents a first embodiment of the power supply;
Fig. 3 presents a second embodiment of the power supply;
Fig. 4 presents voltage waveforms of the power supply of Fig. 3;
Fig. 5 presents a third embodiment of the power supply;
Fig. 6 presents voltage waveforms of the power supply of Fig. 5;
Fig. 7 presents a fourth embodiment of the power supply;
Fig. 8 presents voltage waveforms of the power supply of Fig. 7;
Fig. 9 presents voltage waveforms of the power supply of Fig. 7;
Fig. 10 presents a fifth embodiment of the power supply; and
Fig. 11 presents voltage waveforms of the power supply of Fig. 10.

The embodiments presented in the drawings are intended only for illustrative purpose and do not limit the scope of the invention, as defined by the accompanying claims.

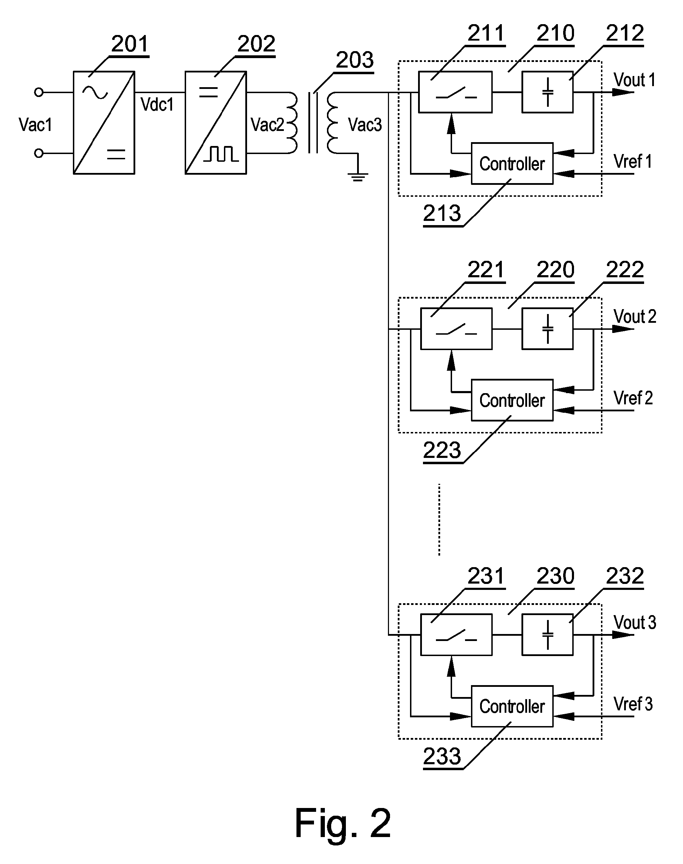

Fig. 2 presents the first, base embodiment of a multi-output switched-mode power supply according to the invention. It comprises an input AC/DC converter 201, for example a rectifier with a smoothing capacitor, which converts an input AC mains voltage Vac1 to a first DC voltage. The first DC voltage is input to a DC/AC converter 202, which produces an AC square wave voltage Vac2. The Vac2 voltage is input to a transformer 203, which outputs an AC voltage Vac3. The transformer 203 separates the output stage from the input stage of the power supply and defines the amplitude of the Vac3 voltage. The DC/AC converter 202 comprises a switch operating at a high frequency, in the range from 1 kHz to 10 MHz, which defines the frequency of the Vac3 voltage. In the basic embodiment, the DC/AC converter 202 switch has a constant duty cycle. The Vac3 signal is input to a plurality of output blocks 210, 220, 230. Each output block comprises a switch 211, 221, 231 regulated by a controller 213, 223, 233 and a filter 212, 222, 232 for smoothening the switch output voltage.

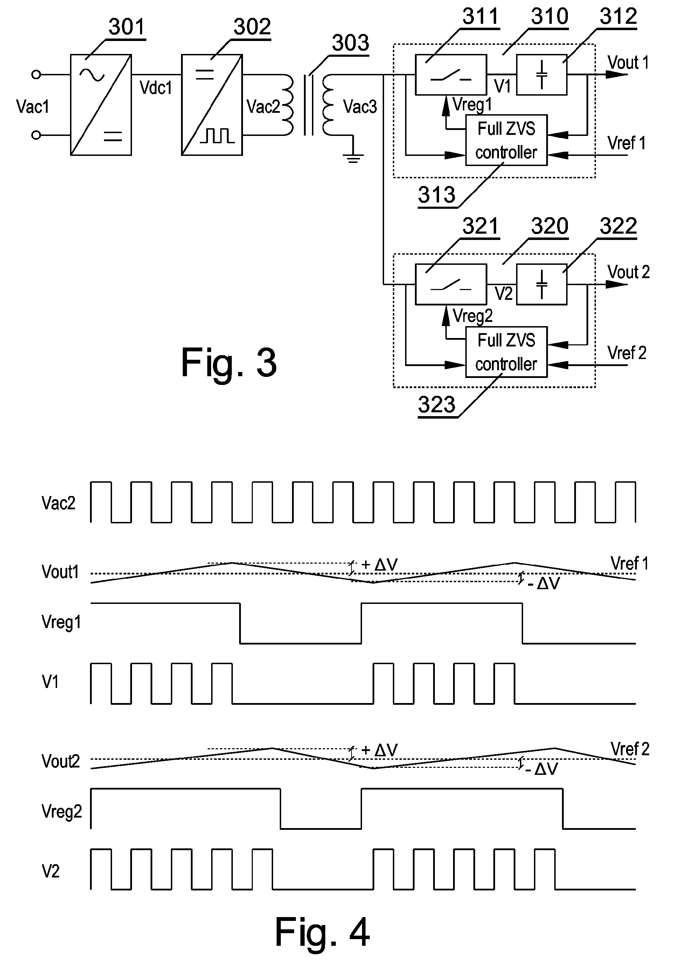

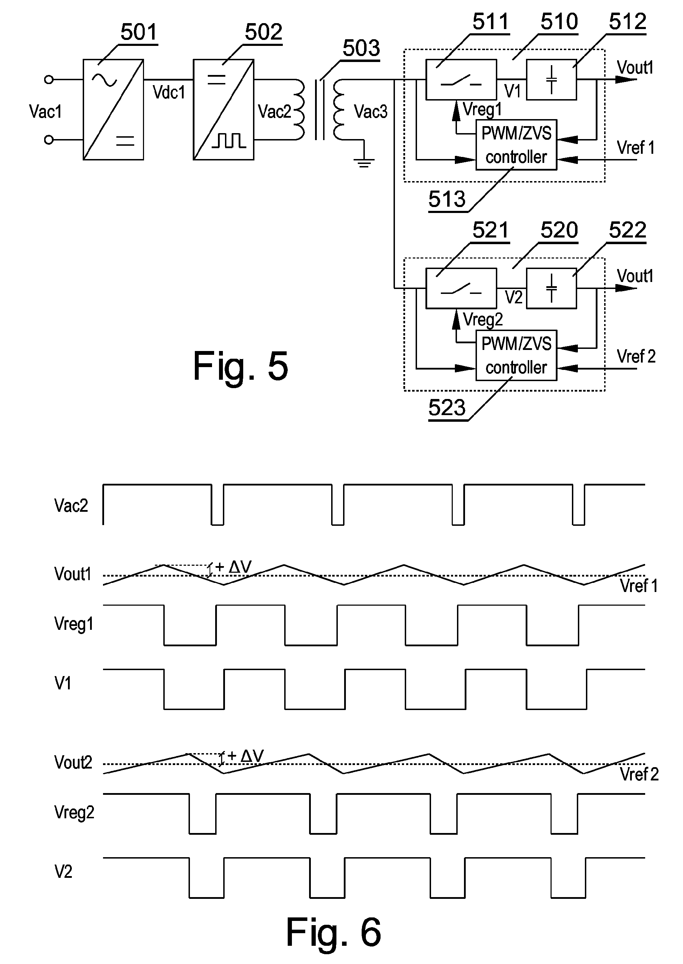

The switch 211, 221, 231 acts as a rectifier of the Vac3 voltage. When turned on, it provides a rectified Vac3 voltage, and when turned off, it provides high impedance. By defining the on/off-time of the switch, the controller 213, 223, 233 may regulate the amplitude of the output voltage Vout1, Vout2, Voutn so that it does not diverge from a reference voltage Vref1, Vref2, Vrefn, respectively, by more than a permitted value ΔV. Two exemplary embodiments of the controller are presented in Fig. 3 and Fig. 5. The characteristic feature of the controller is that it forces the switch to operate as a zero-voltage switch (ZVS) at least at the transition from an off-state to an on-state, which means that the transition is performed when the amplitude of the Vac3 voltage input to the switch is zero. Therefore, the switch does not turn-off the current, which reduces the overshots at the output voltage. Moreover, by using ZVS, the power losses at switching are reduced. The ZVS functionality of the controller is controlled by the Vac3 signal input to the controller.

Another characteristic feature of the power supply according to the invention is the elimination of a DC circuit for filtering and rectifying the voltage that is input to the output blocks. Instead, the AC voltage Vac3 from the transformer is input directly to the output blocks. The Vac3 voltage is rectified and smoothed only once at each stage, by the switch 211, 221, 231 and the filter 212, 222, 232. This also reduces power losses for voltage conversion.

Fig. 3 presents a second embodiment of the power supply according to the invention, and Fig. 4 shows waveforms of specific voltages during its operation. In this example two output blocks have been shown, but it is evident that additional blocks can be added. The elements 301, 302, 303, 310, 311, 312, 320, 321, 322 are equivalent to the respective elements shown in Fig. 2. The DC/AC converter 302 switch has a constant duty cycle set at 50%. A different duty cycle can be set, but 50% is optimal for switching as presented in this embodiment. The controller 313, 323 operates as a full ZVS controller, i.e. the switch 311, 321 is turned on and off at the time when the switch input voltage is zero. The controller regulates the output voltage Vout1, Vout2 so that it does not rise above the reference voltage more than an allowable margin ΔV, and it does not drop below the reference voltage more than the allowable margin ΔV.

The conditions for the controller to turn the switch on are:
- the output voltage Vout1, Vout2 is higher than the reference voltage Vref1, Vref2, respectively, by ΔV;
- the switch input voltage is zero (to allow for zero-voltage switching).

The conditions for the controller to turn the switch off are:
- the output voltage Vout1, Vout2 is lower than the reference voltage Vref1, Vref2, respectively, by ΔV;
- the switch input voltage is zero (to allow for zero-voltage switching).

During the on-time of the switch, a number of Vac3 voltage pulses are input to the filter 312, 322, which causes the increase of the output voltage. The higher the load at a specific output block, or the higher the reference voltage, the longer the on-time of the switch and the larger the number of the Vac3 pulses input to the output block filter.

By using zero-voltage switching at the output blocks, the operation of all output blocks is synchronized to the frequency of the Vac2 signal. Therefore, the inter-block disturbances are limited, which increases the quality of the output voltages, and limits the distribution of noise generated by the power supply elements.

Fig. 5 presents a third embodiment of the power supply according to the invention, and Fig. 6 shows waveforms of specific voltages during its operation. In this example two output blocks have been shown, but it is evident that additional blocks can be added. The elements 501, 502, 503, 510, 511, 512, 520, 521, 522 are equivalent to the respective elements shown in Fig. 2. The DC/AC converter 502 switch has a constant duty cycle set at 90%. A different duty cycle can be set, but 90% is most optimal for switching as presented in this embodiment. The controller 513, 523 operates as a half-PWM and half-ZVS controller, i.e. the switch 511, 521 is turned on at the time when the switch input voltage is zero, and the turn-off time defines the width of the pulse input to the filter 512, 522. The controller regulates the output voltage Vout1, Vout2 so that it does not rise above the reference voltage more than an allowable margin ΔV, and it does not drop below the reference voltage more than the allowable margin ΔV.

The condition for the controller to turn the switch on is: the switch input voltage should be zero (to allow for zero-voltage switching).

The condition for the controller to turn the switch off is: the output voltage Vout1, Vout2 should be lower than the reference voltage Vref1, Vref2, respectively, by ΔV.

During the on-time of the switch, a fragment of Vac3 voltage pulse is input to the filter 512, 522, which causes the increase of the output voltage. The higher the load at a specific output block, or the higher the reference voltage, the longer the on-time of the switch and the longer the pulse input to the output block filter.

By using on-time zero-voltage switching at the output blocks, the operation of all output blocks is synchronized to the frequency of the Vac2 signal. Therefore, the inter-block disturbances are limited, which increases the quality of the output voltages, and limits the distribution of noise generated by the power supply elements.

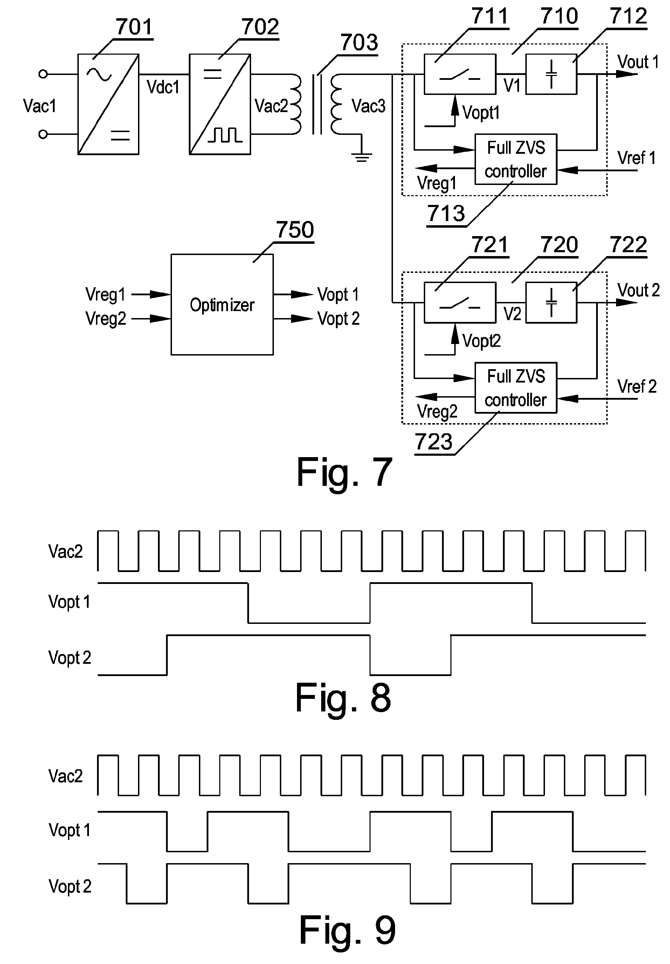

Fig. 7 presents a fourth embodiment of the power supply according to the invention, and Fig. 8 and Fig. 9 show waveforms of specific voltages during its operation. In this example two output blocks have been shown, but it is evident that additional blocks can be added. The elements 701, 702, 703, 710, 711, 712, 713, 720, 721, 722, 723 are equivalent to the respective elements shown in Fig. 3.

The power supply additionally comprises an optimizer 750, for optimizing the on- and off-times of switches at individual output blocks. As shown in Fig. 4, if the switches of different blocks are uncoordinated, the distribution of load at the input stage may be uneven, i.e. at some periods all switches may be turned on, while at some periods all switches may be turned off. In the presented embodiment, the controller 213, 223 voltages Vreg1, Vreg2 are input to the optimizer 750. The optimizer may delay the turn-on of selected controller voltages in order to distribute the load evenly.

The voltage waveforms shown in Fig. 8 correspond to a situation shown in Fig. 4. In this case, the Vopt1 voltage is a direct representation of the Vref1 voltage. In turn, the turn-on time of the Vref2 voltage has been shifted by two pulses, to provide more even distribution of load.

The voltage waveforms shown in Fig. 9 correspond to a situation shown in Fig. 8, but the optimized voltages are generated not only by shifting the controller voltages, but also by distributing them in time. This allows for more even distribution of load in comparison to the solution shown in Fig. 8.

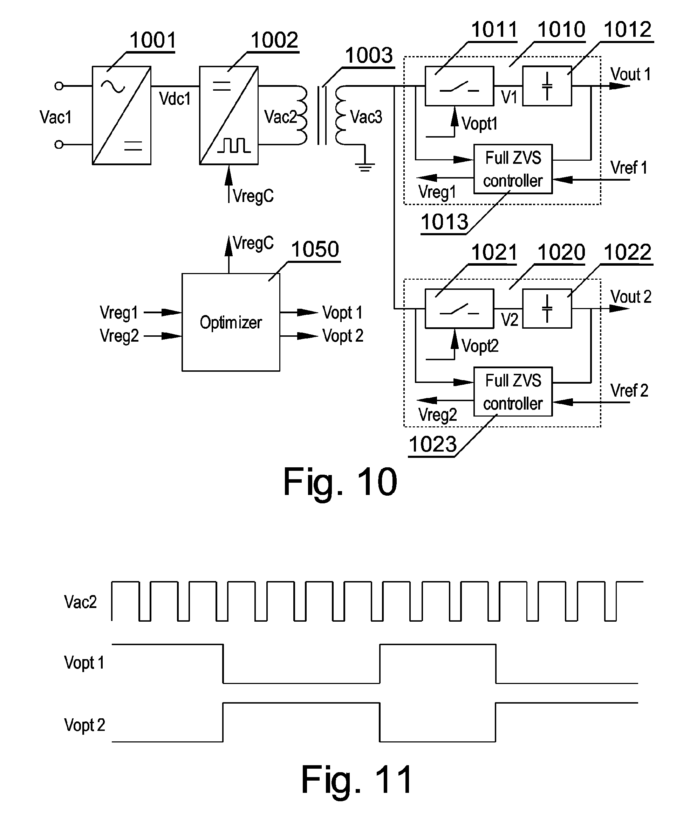

Fig. 10 presents a fifth embodiment of the power supply according to the invention, and Fig. 11 shows waveforms of specific voltages during its operation. In this example two output blocks have been shown, but it is evident that additional blocks can be added. The elements 1001, 1003, 1010, 1011, 1012, 1013, 1020, 1021, 1022, 1023 are equivalent to the respective elements shown in Fig. 3.

The DC/AC converter 1002 has an input VregC for controlling the duty cycle of the Vac2 signal. The VregC signal is generated by an optimizer 1050, which also serves the function of optimizing the on- and off-times of switches at individual output blocks. During its operation, if the optimizer finds uneven load distribution (for example, due to both switches turned on as shown in Fig. 8), it may adjust the duty cycle of the Vac2 signal. When the duty cycle of the Vac2 signal is increased, more power is delivered to the loads at each Vac2 pulse, therefore, the turn-on periods of switches become shorter. Fig. 11 presents voltage waveforms for an increased duty cycle of the Vac2 signal, with no overlapping of the turn-on times of the switches.

The advantage of the presented embodiments is that each output block operates on an input AC signal, in contrast to prior art solutions, in which a DC smoothed and rectified signal is input to the output blocks. Therefore, the structure of such power supply is much simpler than that of the known solutions.

Moreover, by using zero-voltage switching at the output blocks, the operation of all output blocks is synchronized to the frequency of the Vac3 signal. Therefore, the inter-block disturbances are limited, which increases the quality of the output voltages, and limits the distribution of noise generated by the power supply elements.

## Claims

1. A multi-output switched-mode power supply containing an AC voltage Vac1 input, an AC/DC converter having its input coupled to the Vac1 voltage input and providing at its output a DC voltage Vdc1, a DC/AC converter having its input coupled to the Vdc1 voltage and providing at its output an AC voltage Vac2, a transformer having its input connected to the Vac2 voltage and providing a Vac3 voltage at its output **characterized in that** the output of the transformer (203) is coupled to a plurality of output blocks (210, 220, 230), each output block comprising a switch (211, 221, 231) having its input connected to the Vac3 voltage and providing at its output a rectified switch output voltage when turned on and high impedance when turned off, a filter (212, 222, 232) having its input coupled to an output of the switch (211, 221, 231) and providing at its output a smoothed output voltage Vout1, Vout2, Voutn, a controller (213, 223, 233) having its first input connected to the output voltage Vout1, Vout2, Voutn, its second input connected to a reference voltage Vref1, Vref2, Vrefn, and its third input connected to the Vac3 voltage, providing at its output a switch control signal Vreg1, Vreg2, Vregn, wherein the switch control signal Vreg1, Vreg2, Vregn turning the switch on is generated when the output voltage Vout1, Vout2, Voutn drops below the reference voltage Vref1, Vref2, Vrefn and the Vac3 voltage is zero, and the switch control signal Vreg1, Vreg2, Vregn turning the switch off is generated when the output voltage Vout1, Vout2, Voutn increases above the reference voltage Vref1, Vref2, Vrefn.

2. The power supply according to claim 1, **characterized in that** the switch control signal Vreg1, Vreg2, Vregn turning the switch off is generated when the Vac3 voltage is zero.

3. The power supply according to claim 1, **characterized in that** the DC/AC converter (202, 302, 502, 702) provides at its output an AC voltage Vac2 of a constant duty cycle.

4. The power supply according to claim 1, **characterized in that** it further comprises an optimizer (750) having a plurality of inputs, to each of them is sent the switch control signal Vreg1, Vreg2, respectively, provided by the controllers (713, 723), and providing a plurality of optimized output signals Vopt1, Vopt2 sent to the switch control signal inputs of the switches (711, 721), where the optimized output signals Vopt1, Vopt2 control the switch on- and off-times to provide a balanced distribution of load.

5. The power supply according to claim 4, **characterized in that** the balanced distribution of load is provided by shifting the switch turn-on time controlled by selected switch control signals Vreg1, Vreg2.

6. The power supply according to claim 4, **characterized in that** the balanced distribution of load is provided by splitting and evening distribution of the switch control signals Vreg1, Vreg2 over time.

7. The power supply according to claim 4, **characterized in that** the DC/AC converter (1002) has additionally a regulating input coupled to the optimizer (1050), and that the DC/AC converter (1002) provides at its output an AC voltage Vac2 of a variable duty cycle, controled by the regulating input, and that the optimizer (1050) additionally provides a regulating signal sent to the regulating input of the DC/AC converter (1002), which controls the duty cycle of the Vac2 signal to provide a balanced distribution of load.
